# EUROPÄISCHE PATENTSCHRIFT

(11) **EP 3 931 986 B1**
(45) Veröffentlichungstag und Bekanntmachung des Hinweises auf die Patenterteilung: **15.01.2025**
(21) Anmeldenummer: 20707245.5
(22) Anmeldetag: 25.02.2020
(51) Int. Cl.: G02B 6/42, G02B 26/08, H04B 10/80, H04B 10/67, H04B 10/50, H04B 10/114

(54) **OPTISCHE SENDE/EMPFANGS-EINHEIT UND VORRICHTUNG ZUR SIGNALÜBERTRAGUNG**
OPTICAL TRANSCEIVER UNIT AND DEVICE FOR SIGNAL TRANSMISSION
UNITÉ OPTIQUE D'ÉMISSION-RÉCEPTION ET DISPOSITIF DE TRANSMISSION DE SIGNAUX

(30) Priorität: 28.02.2019 DE 102019202766
(43) Veröffentlichungstag der Anmeldung: 05.01.2022
(73) Patentinhaber: Fraunhofer-Gesellschaft zur Förderung der angewandten Forschung e.V., 80686 München (DE)
(72) Erfinder: SCHNEIDER, Tobias, 01109 Dresden (DE)
(74) Vertreter: Zimmermann, Tankred Klaus
(86) Internationale Anmeldenummer: PCT/EP2020/054905
(87) Internationale Veröffentlichungsnummer: WO 2020/173939

(56) Entgegenhaltungen:
- DE-A1- 102014 225 097
- DE-C1- 4 428 790
- US-A1- 2007 140 620
- US-B1- 6 353 693

## Beschreibung

Die vorliegende Erfindung bezieht sich auf das Gebiet der Signalübertragung, insbesondere auf die optische Datenübertragung über zwei Bauteile, die zueinander drehbar angeordnet sind. Ausführungsbeispiele betreffen eine optische Sende/Empfangs-Einheit, insbesondere eine rotationsfähige optische Kurzstrecken-Sende/Empfangs-Einheit für die optische, drahtlose Datenübertragung unter Verwendung eines speziellen Optikdesigns.

Im Stand der Technik sind verschiedene Ansätze bekannt, um eine Signalübertragung zu ermöglichen, beispielsweise eine Datenübertragung zwischen zwei Bauteilen, die zueinander drehbar angeordnet sind. Entweder sind beide Bauteile drehbar gelagert oder eines der Bauteile ist relativ zum anderen drehbar angeordnet. Herkömmliche Ansätze lösen das Problem der Datenübertragung über zwei zueinander rotierende Bauteile durch den Einsatz von Kabeln, wobei zur Übertragung der elektrischen Signale an der Rotationsstelle Schleifringe oder Kontaktbürsten eingesetzt werden. Solche, kontaktbehafteten Signalübertragungsansätze sind nachteilhaft, da aufgrund der kontaktbehafteten Übertragungstechnik die Lebensdauer der Rotationsstelle und damit auch die Lebensdauer des Gesamtsystems reduziert bzw. begrenzt ist, insbesondere aufgrund des Verschleißes der Kontakte. Ferner bewirkt die allseitige Signalausbreitung des elektrischen Signals auf dem Schleifring eine Mehrwegausbreitung, die zu Laufzeitunterschieden der einzelnen elektrischen Signale führen kann, was eine Limitierung der Übertragungsbandbreite hervorrufen kann.

Andere, im Stand der Technik bekannte Ansätze zur Vermeidung der Nachteile kontaktbehafteter Übertragungstechniken bei der Signalübertragung über eine Rotationsstelle verwenden eine optische, drahtlose Datenübertragung unter Verwendung von optischen Sende/Empfangs-Einheiten oder Transceivern, die in den relativ zueinander drehbar angeordneten Bauteilen vorgesehen sind. Dieser optische Ansatz hat den Vorteil, dass diese verschleißfrei arbeiten und damit die Lebensdauer des Gesamtsystems nicht begrenzen. Auch wird die oben erwähnte Mehrwegausbreitung des Signals vermieden, so dass mit solchen optischen, drahtlosen Datenübertragungssystemen eine Limitierung der Übertragungsbandbreite vermieden wird, so dass hohe Datenraten, beispielsweise von 100 Mbit/s und mehr erreichbar sind.

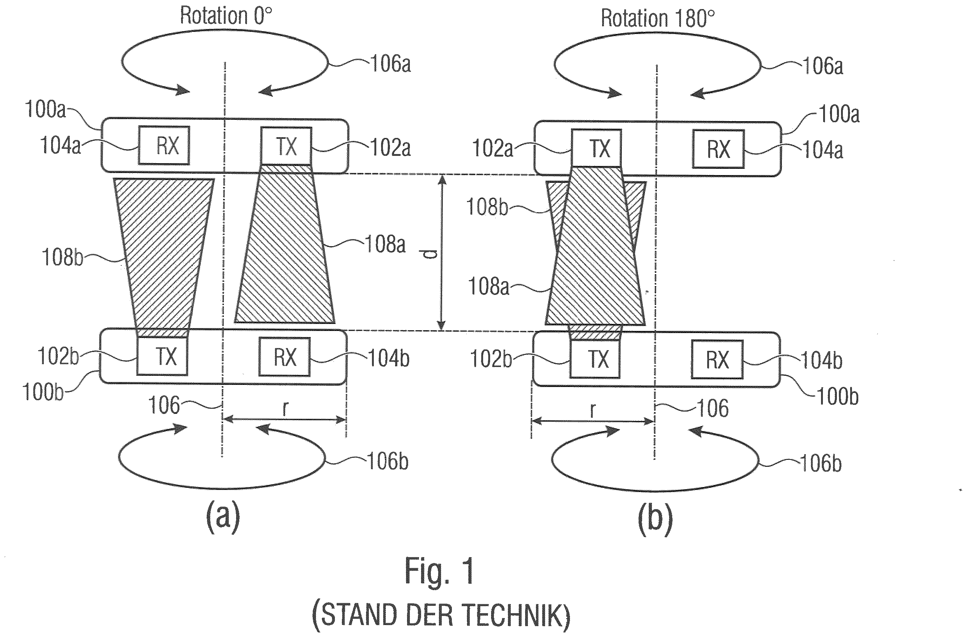

Fig. 1 zeigt eine schematische Darstellung einer herkömmlichen Signalübertragungsvorrichtung umfassend zwei optische, drahtlose Sende/Empfangs-Einheiten, wobei Fig. 1(a) eine Stellung der zwei optischen Sende/Empfangs-Einheiten mit einer intakten Datenverbindung bzw. einem intakten Datenlink zwischen denselben darstellt, und wobei Fig. 1(b) die zwei Sende/Empfangs-Einheiten verdreht zueinander darstellt, so dass die Datenverbindung unterbrochen ist.

Fig. 1(a) zeigt eine erste Sende/Empfangs-Einrichtung 100a, die einen optischen Sender 102a und einen optischen Empfänger 104a aufweist. In Fig. 1(a) ist ferner eine Drehachse 106 dargestellt, um die die erste Sende/Empfangs-Einheit 100a drehbar ist. Der optische Sender 102a und der optische Empfänger 104a sind beabstandet von der Drehachse 106 in der Sende/Empfangs-Einheit 100a angeordnet. Der optische Sender 102a erzeugt für die optische Datenübertragung einen ersten Sendestrahl 108a, der in Richtung einer zweiten Sende/Empfangs-Einheit 100b gerichtet ist. Die zweite Sende/Empfangs-Einheit umfasst ihrerseits einen optischen Sender 102b und einen optischen Empfänger 104b, die beidseitig zur Drehachse 106 angeordnet sind. Die zweite Sende/Empfangs-Einheit ist um die Drehachse 106 drehbar angeordnet, wie dies durch den Pfeil 106b angedeutet ist. Bei dem in Fig. 1(a) dargestellten Beispiel sind die zwei Sende/Empfangs-Einheiten 100a, 100b so zueinander ausgerichtet, dass der optische Sender 102a in der ersten Sende/EmpfangsEinheit 100a dem optischen Empfänger 104b in der zweiten Sende/Empfangs-Einheit 102b gegenüberliegt, und dass der optische Sender 102b der zweiten Sende/Empfangs-Einheit 100b dem optischen Empfänger 104a in der ersten Sende/Empfangs-Einheit 100a gegenüberliegt. Die von den optischen Sendern 102a bzw. 102b ausgestrahlten Sendestrahlen 108a und 108b sind auf die gegenüberliegenden optischen Empfänger 104b bzw. 104a gerichtet. Bei einer Ausrichtung der zwei Sende/Empfangs-Einheiten 100a, 100b entsprechend der Darstellung in Fig. 1(a) ist eine bidirektionale Datenübertragung oder eine unidirektionale Datenübertragung, wenn nur einer der optischen Sender eingesetzt wird, möglich. Mit anderen Worten ist die Datenverbindung zwischen den zwei Sende/Empfangs-Einheiten 100a, 100b intakt.

Der Nachteil der anhand der Fig. 1(a) dargestellten, konventionellen Vorrichtung zur optischen, drahtlosen Datenübertragung über eine Rotationsstelle besteht darin, dass eine Ausrichtung der entsprechenden Sender/Empfänger der zwei drehbaren bzw. relativ zueinander verdrehbaren Sende/Empfangs-Einheiten vorliegen muss, so dass, mit anderen Worten, Sender und Empfänger im Sichtkontakt zueinander stehen. Kommt es jedoch zu einer Verdrehung der Sende/Empfangs-Einheiten 100a, 100b aus der in Fig. 1(a) dargestellten Lage zueinander, beispielsweise bei einer Drehung oder Rotation der ersten Sende/Empfangs-Einheit 100a bezogen auf die zweite Sende/Empfangs-Einheit 100b um beispielsweise 180°, wie es in Fig. 1(b) dargestellt ist, so liegen sich Sender und Empfänger nicht mehr gegenüber. Vielmehr liegen sich, wie zu erkennen ist, die entsprechenden Sender bzw. die entsprechenden Empfänger in den zwei Sende/Empfangs-Einheiten 100a, 100b gegenüber. Mit anderen Worten besteht zwischen Sender und Empfänger in den zwei gegenüberliegenden Sende/Empfangs-Einheiten kein Sichtkontakt bzw. der Sichtkontakt geht verloren, so dass die Datenverbindung unterbrochen wird.

Die US 4 401 360 A beschreibt einen optischen Schleifring für eine optische Kommunikation zwischen einem Paar von Elementen, die sich frei zueinander drehen können. Diese Elemente können ein Paar von optischen Fasern, ein elektrischer Leiter und eine optische Faser oder ein Paar von elektrischen Leitern sein. Ein Element ist an einer ersten Montagevorrichtung angebracht und das andere Element ist an einer zweiten Montagevorrichtung befestigt. Ein optischer Empfänger ist in der Mitte der ersten Montagevorrichtung auf einer gemeinsamen Drehachse in Bezug auf die zweite Montagevorrichtung positioniert. Der andere optische Empfänger ist auf der zweiten Montagevorrichtung auf der gemeinsamen Drehachse angeordnet. Ein optischer Emitter ist außermittig an der ersten Montagevorrichtung angebracht, und der andere optische Emitter ist außermittig an der zweiten Montagevorrichtung montiert. Der an der ersten Montagevorrichtung montierte optische Sender ist auf den an der zweiten Montagevorrichtung montierten optischen Empfänger gerichtet, und der an der zweiten Montagevorrichtung montierte optische Sender ist auf den an der ersten optischen Vorrichtung montierten optischen Empfänger gerichtet.

Die US 6,353,693 B1 beschreibt eine optische Kommunikationsvorrichtung zur Kommunikation zwischen einer statorseitigen Schaltung und einer rotorseitigen Schaltung. Ein Paar optischer Koppler ist zwischen einem Stator und einem Rotor angeordnet, um eine bidirektionale Kommunikation zwischen den Schaltungen zu ermöglichen. Ein Optokoppler hat ein rotorseitiges Lichtempfangselement, das auf dem Rotor angeordnet ist, wobei sich die Rotationsachse durch diesen erstreckt, und ein statorseitiges Lichtemissionselement, das auf dem Stator an einer von der Rotationsachse entfernten Stelle angeordnet ist. Der andere Optokoppler hat ein auf dem Stator angeordnetes Lichtempfangselement, durch das sich die Rotationsachse erstreckt, und ein Lichtemissionselement der Rotorseite, das auf dem Rotor an einer von der Rotationsachse entfernten Stelle angeordnet ist.

Die DE10 2014 225 097 A1 beschreibt eine Vorrichtung zur optischen Datenübertragung zwischen zwei auf einer gemeinsamen Achse angeordneten Bauteilen, wobei auf dem ersten Bauteil eine erste Sendeeinrichtung und auf dem zweiten Bauteil mindestens eine erste Empfangseinrichtung angeordnet sind. Die erste Sendeeinrichtung ist koaxial zur gemeinsamen Achse und die mindestens eine erste Empfangseinrichtung ist gegenüber der gemeinsamen Achse in radialer Richtung versetzt angeordnet.

Die US 2007/140620 A1 beschreibt ein Drehscharnier zum bidirektionalen oder unidirektionalen Übertragen eines optischen Signals von einem Teil zum anderen in einem elektronischen Gerät, wobei sich diese Teile relativ zueinander drehen können. Das optische Signal kann unabhängig von in entgegengesetzter Richtung übertragenem Licht von einer Seite auf die andere Seite des Scharniers übertragen werden. Ein emittierter optischer Strahl wird auf eine gemeinsame Rotationsachse gerichtet. Ein Empfangselement, das den optischen Strahl sammelt, ist zusammenfallend mit der gemeinsamen Rotationsachse auf der Empfangsseite angeordnet.

Ausgehend von dem oben beschriebenen Stand der Technik liegt der vorliegenden Erfindung die Aufgabe zugrunde, eine verbesserte Sende/Empfangs-Einheit sowie eine verbesserte Vorrichtung umfassend dieselbe bereitzustellen, bei der eine zuverlässige Datenübertragung unabhängig von einer relativen Drehposition bezüglich einer weiteren Sende/Empfangs-Einheit sichergestellt werden kann.

Diese Aufgabe wird durch eine optische Sende/Empfangs-Einheit gemäß Anspruch 1 gelöst.

Vorteilhafte Ausgestaltungen sind in den Unteransprüchen definiert.

Erfindungsgemäß wurde erkannt, dass das Problem der Datenunterbrechung bei einer herkömmlichen Signalübertragungsvorrichtung umfassend zwei optische, drahtlose Sende/Empfangs-Einheiten insbesondere dann auftritt, wenn der Abstand d zwischen den zwei Sende/Empfangs-Einheiten oder Transceivern in der Größenordnung der Transceiver-Größe liegt, beispielsweise wenn der Abstand kleiner ist als ein Radius der Sende/Empfangs-Einheiten. Solche kurzen Abmessungen des Abstands d treten beispielsweise bei Anwendungen auf, bei denen eine Datenverbindung zwischen gedruckten Schaltungsplatinen, Printed Circuit Boards (PCBs), bereitgestellt werden sollen, oder beim Einsatz der Vorrichtung aus Fig. 1 als optischer Schleifringersatz an rotierenden Maschinenteilen. Mit anderen Worten führt der geringe Abstand der Sende/Empfangs-Einheiten dazu, dass der von den entsprechenden optischen Sendern ausgestrahlte Sendestrahl nicht ausreichend aufweitet, um auch bei einer Verdrehung der Sende/Empfangs-Einheiten zueinander den entsprechenden Empfänger der gegenüberliegenden Sende/Empfangs-Einheit zu erreichen, so dass die in Fig. 1(b) dargestellte Situation eintritt, die bei einer Drehung der Bauteile, auf denen die entsprechenden Sende/Empfangs-Einheiten 100a, 100b angeordnet sind, relativ zueinander zu Unterbrechungen der Datenübertragung führen kann, dass also keine kontinuierliche Datenverbindung zwischen den zwei Bauteilen über die in Fig. 1 gezeigte konventionelle Vorrichtung sichergestellt ist.

Der vorliegenden Erfindung liegt die Erkenntnis zugrunde, dass die oben diskutierte Problematik in herkömmlichen rotationsfähigen optischen Kurzstrecken-Transceivern für eine optische drahtlose Datenübertragung in der Anordnung des optischen Senders bzw. des optischen Empfängers liegt. Bei Sende/Empfangs-Einheiten, wie sie anhand der Fig. 1 erläutert wurden, umfasst der optische Sender eine Lichtquelle und das Abstrahlprofil des Sendestrahls wird durch eine Sendeoptik geformt. Der optische Empfänger umfasst beispielsweise eine Fotodiode, der wiederum eine eigene Empfangsoptik zugeordnet ist, um den empfangenen Sendestrahl, also das empfangene Lichtsignal, einzusammeln. Diese beiden elementaren Bestandteile des rotationsfähigen, optischen Kurzstrecken-Transceivers sind nebeneinander angeordnet, wie dies anhand der Fig. 1 erläutert wurde, so dass die Drehachse zwischen den beiden Einheiten, nämlich dem Sender und dem Empfänger verläuft. Diese Ausgestaltung führt, wie oben erläutert, dazu, dass bei einem geringen Abstand zwischen den zwei Transceivern, verglichen mit der Größe des Transceivers, eine Rotation der Elemente gegeneinander gar nicht oder nur in einem geringen Umfang möglich ist, da eine zu große Verdrehung bzw. Rotation der zwei Transceiver zueinander zu einer Unterbrechung der Übertragung führt, da sich die Sender und Empfänger in den entsprechenden Transceivern nicht mehr sehen.

Zur Lösung dieser Problematik schlägt die vorliegende Erfindung eine Ausgestaltung einer optischen Sende/Empfangs-Einheit vor, bei der von der konventionellen Anordnung von Sender und Empfänger sowie der konventionellen Bereitstellung separater Empfangs- und Sende-Optiken Abstand genommen wird, und stattdessen ein spezielles Optikdesign bereitgestellt wird, welches die Empfangsoptik und die Sendeoptik miteinander verbindet, wodurch eine Anordnung von optischem Sender und optischem Empfänger ermöglicht wird, die eine zuverlässige Datenübertragung zwischen zwei Sende/Empfangs-Einheiten ermöglicht, unabhängig wie diese zueinander verdreht sind.

Die vorliegende Erfindung schafft eine optische Sende/Empfangs-Einheit, mit:
einem Träger, der um eine Drehachse drehbar ist,
einem optischen Empfänger, der an dem Träger auf der Drehachse angeordnet ist, um ein optisches Empfangssignal aus einer ersten Richtung zu empfangen,
einem optischen Sender, der benachbart zu dem optischen Empfänger an dem Träger angeordnet ist, um ein optisches Sendesignal in einer zweiten Richtung auszusenden, und
einer Sende/Empfangs-Optik, die an dem Träger auf der Drehachse oberhalb des optischen Empfängers angeordnet ist und sich über den optischen Empfänger und den optischen Sender erstreckt, wobei die Sende/Empfangs-Optik eine Empfangsoptik und eine in die Empfangsoptik integrierte Sendeoptik umfasst,
wobei die Empfangsoptik ausgebildet ist, um das auf die Sende/Empfangs-Optik auftreffende optische Empfangssignal in Richtung des optischen Empfängers auf der Drehachse zu lenken,
und wobei die Sendeoptik ausgebildet ist, um das von dem optischen Sender ausgesendete optische Sendesignal auf die Drehachse zu lenken, so dass sich ein Sendestrahl von der Sende/ Empfangs-Optik entlang der Drehachse ausbreitet, dadurch gekennzeichnet, dass
die Sendeoptik durch einen Abschnitt einer dem optischen Empfänger abgewandten Oberfläche der Empfangsoptik gebildet ist,
der Abschnitt ausgebildet ist, um das von einer Sendefläche empfangene optische Sendesignal in eine Richtung parallel zu der Drehachse abzulenken,der Abschnitt durch eine Ausnehmung in der dem optischen Empfänger abgewandten Oberfläche der Empfangsoptik gebildet ist, und
die Funktion der Sendefläche durch eine passende Formgebung der dem optischen Empfänger zugewandten Oberfläche der Empfangsoptik realisiert ist.

Die vorliegende Erfindung schafft ferner eine Vorrichtung zur Signalübertragung, mit zumindest einer ersten optischen Sende/Empfangs-Einheit gemäß einem der vorliegenden Erfindung, und zumindest einer zweiten optischen Sende/Empfangs-Einheit gemäß einem der vorliegenden Erfindung, wobei die erste und die zweite optischen Sende/EmpfangsEinheit derart zueinander angeordnet sind, dass ein Sendestrahl einer Sende/EmpfangsEinheit die Empfängeroptik einer gegenüberliegenden Sende/Empfangs-Einheit beleuchtet.

Ein Vorteil der erfindungsgemäßen Sende/Empfangs-Einheit besteht darin, dass eine kontinuierliche bzw. nicht-unterbrochene Datenverbindung zwischen zwei solchen Sende/Empfangs-Einheiten sichergestellt wird, unabhängig davon, wie die zwei Sende/Empfangs-Einheiten zueinander um die optische Achse verdreht angeordnet sind, so dass die im Zusammenhang mit der Fig. 1 erläuterten Probleme einer Datenübertragungsunterbrechung vermieden werden. Mit anderen Worten stellt die erfindungsgemäße Sende/Empfangs-Einheit sicher, dass bei deren Verwendung in einer Vorrichtung zur optischen Datenübertragung zwischen zwei relativ zueinander drehbaren Bauteilen ein Sichtkontakt zwischen dem optischen Sender in einem der Bauteile und dem optischen Sender in dem anderen der Bauteile unabhängig von einer Verdrehung der jeweiligen Bauteile zueinander sichergestellt ist. Hierdurch werden unerwünschte oder sogar die Sicherheit gefährdende Unterbrechungen der Datenübertragung vermieden. Ferner kann eine Erhöhung der Datenübertragungsrate über eine optische Schnittstelle erreicht werden.

Gemäß Ausführungsbeispielen verschiebt die Sendeoptik das von dem optischen Sender ausgesendete optische Sendesignal derart auf die Drehachse, dass der Sendestrahl die Sende/Empfangs-Optik zentral verlässt.

Gemäß Ausführungsbeispielen verschiebt die Sendeoptik das von dem optischen Sender ausgesendete optische Sendesignal derart auf die Drehachse, dass der Sendestrahl im Wesentlichen parallel zu der Drehachse ist.

Gemäß Ausführungsbeispielen ist die Sendeoptik in die Empfangsoptik gebildet ist oder in die Empfangsoptik integriert.

Gemäß Ausführungsbeispielen ist der erste Abschnitt oberhalb des optischen Senders angeordnet.

Gemäß Ausführungsbeispielen ist der zweite Abschnitt auf der Drehachse oder benachbart zu der Drehachse angeordnet.

Gemäß Ausführungsbeispielen ist der erste Abschnitt durch einen Vorsprung in der dem optischen Empfänger zugewandten Oberfläche der Empfangsoptik gebildet, und der zweite Abschnitt ist durch eine Ausnehmung in der dem optischen Empfänger abgewandten Oberfläche der Empfangsoptik gebildet.

Gemäß Ausführungsbeispielen weist die Ausnehmung eine erste Oberfläche auf, die sich ausgehend von der dem optischen Empfänger abgewandten Oberfläche im Wesentlichen parallel zu der Drehachse in die Empfangsoptik erstreckt, und die Ausnehmung weist eine zweite Oberfläche auf, die an die erste Oberfläche angrenzt und sich ausgehend von der ersten Oberfläche unter einem Winkel kleiner oder gleich 90° bezüglich des Trägers zu der dem optischen Empfänger abgewandten Oberfläche erstreckt.

Gemäß Ausführungsbeispielen ist der Winkel größer als 0° und kleiner als ein Totalreflexionswinkel des benutzen Materials.

Gemäß Ausführungsbeispielen schneidet die erste Oberfläche benachbart zu der Drehachse angeordnet ist, und die zweite Oberfläche die Drehachse, oder die erste Oberfläche ist benachbart zu der Drehachse angeordnet, und die zweite Oberfläche erstreckt sich von der Drehachse weg.

Gemäß Ausführungsbeispielen weist der erste Abschnitt eine erste Sendefläche auf, die oberhalb des optischen Senders angeordnet ist und das von dem optischen Sender ausgesendete optische Sendesignal in Richtung der Drehachse lenkt, und der zweite Abschnitt weist eine zweite Sendefläche auf, die zentral auf der dem optischen Empfänger abgewandten Oberfläche der Empfangsoptik angeordnet ist und das von der ersten Sendefläche empfangene optische Sendesignal parallel zu der Drehachse lenkt.

Gemäß Ausführungsbeispielen weisen die erste Sendefläche und die zweite Sendefläche jeweils eine ebene Fläche auf, die parallel zueinander sind, um eine seitliche Verschiebung des optischen Sendesignals zu der Drehachse zu bewirken.

Gemäß Ausführungsbeispielen sind die erste Sendefläche und die zweite Sendefläche als sphärische, asphärische oder Freiformoptik ausgebildet, um neben einer seitlichen Verschiebung des optischen Sendesignals zu der Drehachse auch eine Strahlformung des optischen Sendesignals zu bewirken, um einen erwünschten Sendestrahl zu erhalten.

Gemäß Ausführungsbeispielen sind die erste Sendefläche und die zweite Sendefläche unterschiedlich ausgebildet.

Gemäß Ausführungsbeispielen weist der erste Abschnitt eine Sendefläche auf, die oberhalb des optischen Senders angeordnet ist und das von dem optischen Sender ausgesendete optische Sendesignal in Richtung der Drehachse lenkt, und der zweite Abschnitt ist ausgebildet, um das von der ersten Sendefläche empfangene optische Sendesignal parallel zu der Drehachse zu lenken.

Gemäß Ausführungsbeispielen ist der erste Abschnitt oberhalb des optischen Senders ausgebildet, um das von dem optischen Sender ausgesendete optische Sendesignal in Richtung der Drehachse zu lenken, und der zweite Abschnitt weist eine Sendefläche auf, die zentral auf der dem optischen Empfänger abgewandten Oberfläche der Empfangsoptik angeordnet ist und das von dem ersten Abschnitt empfangene optische Sendesignal parallel zu der Drehachse lenkt.

Gemäß Ausführungsbeispielen ist die Sendefläche als sphärische, asphärische oder Freiformoptik ausgebildet, um eine Strahlformung des optischen Sendesignals zu bewirken, um einen erwünschten Sendestrahl zu erhalten

Gemäß Ausführungsbeispielen weist der Träger eine Trägeroberfläche auf, von der sich die Drehachse senkrecht erstreckt.

Gemäß Ausführungsbeispielen sind der optische Empfänger und der optische Sender auf der Trägeroberfläche angeordnet, oder der optische Empfänger und der optische Sender sind an der Trägeroberfläche mit gleichen oder unterschiedlichen Abständen von der Trägeroberfläche angeordnet.

Gemäß Ausführungsbeispielen umfasst die optische Sende/Empfangs-Einheit zumindest einen weiteren optischen Sender, der benachbart zu dem optischen Empfänger an dem Träger angeordnet ist, wobei die Sende/Empfangs-Optik zumindest eine weitere Sendeoptik aufweist, die in der Empfangsoptik angeordnet oder integriert ist.

Gemäß Ausführungsbeispielen umfasst der optische Empfänger eine Photodiode, PD, und der optische Sender umfasst eine Laserdiode, LD, oder eine Licht emittierende Diode, LED.

Gemäß Ausführungsbeispielen liegt eine Wellenlänge des optischen Empfangssignals und des optischen Sendesignals im ultravioletten Bereich, im sichtbaren Bereich oder im Infrarotbereich.

Gemäß Ausführungsbeispielen weist die Empfangsoptik eine erste Empfangsfläche auf der dem optischen Empfänger zugewandten Oberfläche der Empfangsoptik und eine zweite Empfangsfläche auf der dem optischen Empfänger abgewandten Oberfläche der Empfangsoptik auf, wobei die erste Empfangsfläche und die zweite Empfangsfläche als sphärische, asphärische oder Freiformoptik ausgebildet sind

Gemäß Ausführungsbeispielen sind die erste Empfangsfläche und die zweite Empfangsfläche unterschiedlich ausgebildet.

Gemäß Ausführungsbeispielen ist die Vorrichtung für eine bidirektionale Übertragung in beiden Richtungen oder für eine unidirektionale Übertragung in nur einer Richtung ausgelegt.

Gemäß Ausführungsbeispielen bilden die Drehachsen der ersten und der zweite optischen Sende/Empfangs-Einheit eine gemeinsame Achse, oder bei der die Drehachsen der ersten und der zweite optischen Sende/Empfangs-Einheit weisen einen bestimmten Versatz auf.

Gemäß Ausführungsbeispielen ist der bestimmte Versatz zwischen 0 und größer als ein Radius der Sende/Empfangs-Optik.

Gemäß Ausführungsbeispielen sind die erste und die zweite optische Sende/EmpfangsEinheit mit einem Abstand zueinander angeordnet, der, verglichen mit der Größe der Sende/Empfangs-Einheiten, klein ist.

Gemäß Ausführungsbeispielen ist der Abstand kleiner als ein Durchmesser der Sende/Empfangs-Einheiten.

Bevorzugte Ausführungsformen der vorliegenden Anmeldung werden nachfolgend unter Bezugnahme auf die beiliegenden Zeichnungen näher erläutert. Es zeigen:
- Fig. 1: zeigt eine schematische Darstellung einer herkömmlichen Signalübertragungsvorrichtung umfassend zwei optische, drahtlose Sende/Empfangs-Einheiten, wobei Fig. 1(a) eine Stellung der zwei optischen Sende/Empfangs-Einheiten mit einer intakten Datenverbindung bzw. einem intakten Datenlink zwischen denselben darstellt, und wobei Fig. 1(b) die zwei Sende/Empfangs-Einheiten verdreht zueinander darstellt, so dass die Datenverbindung unterbrochen ist;
- Fig. 2: zeigt den Aufbau einer Sende/Empfangs-Einheit gemäß einem Ausführungsbeispiel der vorliegenden Erfindung;
- Fig. 3: zeigt anhand der Fig. 3(a) bis Fig. 3(d) verschiedene Ausführungsformen für die Sende/Empfangs-Optik;
- Fig. 4: zeigt Ausführungsbeispiele für die Ausgestaltung der Sende/Empfangs-Einheit in Draufsicht, wobei Fig. 4(a) eine runde bzw. kreisförmige Ausgestaltung der Sende/Empfangs-Einheit 200 und Fig. 4(b) eine rechteckige oder quadratische Ausgestaltung der Sende/Empfangs-Einheit 200 darstellt;
- Fig. 5: zeigt anhand der Fig. 5(a) und Fig. 5(b) verschiedene Ausführungsformen für die Anordnung von optischem Sender/Empfänger auf einem Träger der Sende/Empfangs-Optik;
- Fig. 6: zeigt ein Ausführungsbeispiel für eine Signalübertragungseinrichtung, welche zwei zueinander drehbar angeordnete Bauteile aufweist, die jeweils mit einer erfindungsgemäß ausgestalteten Sende/Empfangs-Einheit versehen sind; und
- Fig. 7: zeigt ein Ausführungsbeispiel der erfindungsgemäßen Sende/Empfangs-Einheit, bei der die Sende/Empfangs-Optik an einer Oberfläche eine Oberflächenstruktur aufweist.

In der nachfolgenden Beschreibung der Ausführungsbeispiele der vorliegenden Erfindung werden in den Figuren gleichwirkende oder gleiche Elemente mit den gleichen Bezugszeichen versehen.

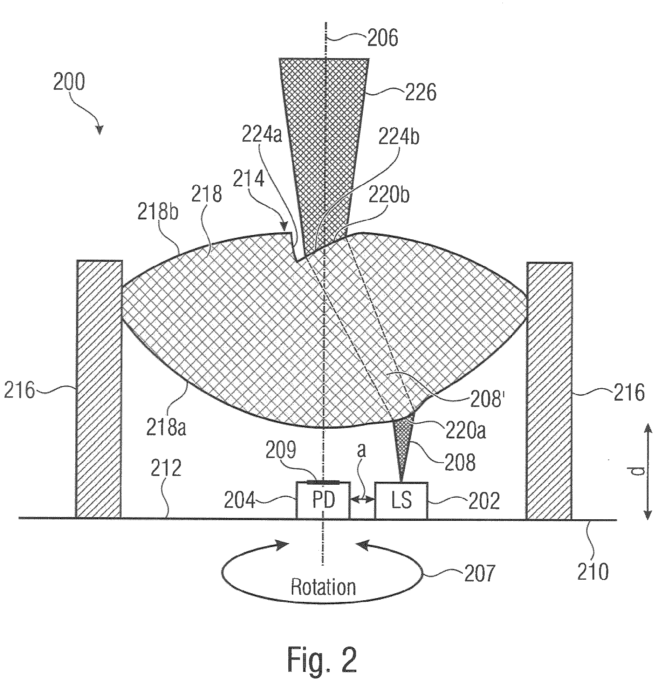

Fig. 2 zeigt den Aufbau einer Sende/Empfangs-Einheit gemäß einem Ausführungsbeispiel der vorliegenden Erfindung. Die Sende/Empfangs-Einheit 200 umfasst einen optischen Sender 202 und einen optischen Empfänger 204. Die Sende/Empfangs-Einheit 200 ist um die Drehachse 206 drehbar angeordnet, wie durch den Pfeil 207 angedeutet ist. In Fig. 2 ist ferner der Sendestrahl 208 dargestellt, der von dem optischen Sender 202 bereitgestellt wird. Der optische Empfänger 204 ist so angeordnet, dass dessen Position mit einer Position der Drehachse 206 übereinstimmt. Der optische Empfänger 204 empfängt ein optisches Empfangssignal aus einer ersten Richtung, und der optische Sender 202 sendet ein optisches Sendesignal in eine zweite Richtung, die der ersten Richtung im Wesentlichen entgegengesetzt ist. Bei dem dargestellten Ausführungsbeispiel umfasst der optische Empfänger 204, der beispielsweise durch eine Fotodiode, PD, gebildet sein kann, eine aktive Fläche 209 zum Empfang von einfallendem Licht. Der Empfänger 204 ist derart im Bereich der Drehachse 206 angeordnet, dass die Drehachse 206 mittig auf der aktiven Fläche 209 und senkrecht zu derselben steht. Bei dem dargestellten Ausführungsbeispiel umfasst die Sende/Empfangs-Einheit bzw. der Transceiver 200 ferner einen Träger 210, und auf einer Oberfläche 212 des Trägers sind bei dem dargestellten Ausführungsbeispiel sowohl der optische Sender 202 als auch der optische Empfänger 204 angeordnet. Der optische Sender 202 ist versetzt zu der Drehachse 206 und beabstandet von dem optischen Empfänger 204 angeordnet. Mit anderen Worten ist der optische Empfänger 204 bezogen auf die Drehachse 206 mittig auf dem Träger 210 angeordnet, und der optische Sender 206 ist außermittig bzw. exzentrisch bezogen auf die Drehachse 206 auf dem Träger 210 angeordnet. Der Abstand a zwischen dem optischen Empfänger 204 und optischen Sender 202 kann gemäß Ausführungsbeispielen vom Systementwurf abhängen.

Die Sende/Empfangs-Einheit 200 umfasst ferner eine Sende/Empfangs-Optik 214, die beabstandet von der Trägeroberfläche 212 und damit beabstandet von dem optischen Sender 202 und dem optischen Empfänger 204 angeordnet ist. Die Sende/Empfangs-Einheit 200 umfasst eine Trägerstruktur 216 zur Befestigung/Montage der Sende/Empfangs-Optik 214. Die Trägerstruktur 216 ist auf der Trägeroberfläche 212 des Trägers 210 angeordnet und erstreckt sich, wie in Fig. 2 dargestellt ist, nach oben, so dass die Sende/Empfangs-Optik beabstandet von der Trägeroberfläche 212 angeordnet ist. Gemäß Ausführungsbeispiel ist die Sende/Empfangs-Optik mit einem Abstand d von der Oberfläche 212 des Trägers 210 angeordnet. Der Abstand ist z.B. von dem Abstrahlwinkel des Senders bestimmt, um die Fläche 220a nicht zu groß werden zu lassen. Der ist üblicherweise kleiner als der Radius der Optik 214 und kann bis kurz vor die Quelle reichen. Der Abstand d kann im Bereich zwischen der gerade erwähnten unteren Grenze bis zum Durchmesser der Optik 214 liegen. Der Abstand d ist, wie in Fig. 2 dargestellt ist, entlang der Drehachse 208 von der Trägeroberfläche 212 bis zur Optik 214 gemessen.

Erfindungsgemäß umfasst die Sende/Empfangs-Optik 214 eine Empfangsoptik 218 und eine Sendeoptik, die in der Empfangsoptik 218 angeordnet ist. Mit anderen Worten ist die Sende/Empfangs-Optik primär durch die Empfangsoptik 218 gebildet, die auf der Drehachse 206 angeordnet ist und sich sowohl über den optischen Empfänger 204 als auch über den optischen Sender 202 erstreckt. Die Sendeoptik umfasst einen ersten Abschnitt 220a, der auf einer ersten, dem optischen Empfänger 204 zugewandten Oberfläche 218a der Empfangsoptik 218 angeordnet ist. Bei dem in Fig. 2 dargestellten Ausführungsbeispiel ist der erste Abschnitt 220a der Sendeoptik durch einen oberhalb des optischen Senders 202 angeordneten und bezüglich der ersten Oberfläche 218a der Empfangsoptik konvex ausgeformten Abschnitt der Empfangsoptik 218 gebildet. Die Sendeoptik umfasst ferner einen zweiten Abschnitt 220b, der auf einer zweiten, dem optischen Empfänger 204 abgewandten Oberfläche 218b der Empfangsoptik 218 angeordnet ist. Bei dem dargestellten Ausführungsbeispiel ist der zweite Abschnitt 220b der Sendeoptik durch einen konvexen Einschnitt in der Oberfläche 218b im Bereich der Drehachse 206 gebildet. Der konvexe Abschnitt 220b umfasst eine erste Oberfläche 224a und eine zweite Oberfläche 224b. Die erste Oberfläche 224a erstreckt sich benachbart zu der Drehachse 206 im Wesentlichen senkrecht zu der Oberfläche 212 des Trägers 210 und parallel zu der Drehachse 206 in die Empfangsoptik 218 hineinerstreckt, und ist lediglich eine Verbindungsfläche, um die Sende- und Empfangsfläche zu verbinden, hat aber keinen optischen Nutzen. Eine zweite Oberfläche 224b erstreckt sich vom unteren Ende der ersten Oberfläche 224a, also dem von der Oberfläche 218b beabstandeten Ende der ersten Oberfläche 224a, zu der Oberfläche 218b der Empfangsoptik 218. Die zweite Oberfläche 224b erstreckt sich bezüglich der Oberfläche 212 des Trägers 210 unter einem Winkel in die zweite Richtung, in die das optische Signal 208 von der optischen Signalquelle 202 abgestrahlt wird. Gemäß Ausführungsbeispielen ist der Winkel größer als 0° und kleiner als ein Totalreflexionswinkel des benutzen Materials, also des Materials der Send/Empfangsoptik. Der Winkel kann zwischen 30° und 45° sein und beträgt gemäß einem Ausführungsbeispiel ~42°. Bei dem in Fig. 2 dargestellten Ausführungsbeispiel ist die zweite Oberfläche 224b des zweiten Abschnitts 220b der Sendeoptik konvex gebogen ausgestaltet.

Die erste, dem optischen Empfänger 204 zugewandte Oberfläche 218a der Empfangsoptik 218 wird auch als erste Empfangsfläche bezeichnet, und die zweite, erste, dem optischen Empfänger 204 abgewandte Oberfläche 218b der Empfangsoptik 218 wird auch als zweite Empfangsfläche bezeichnet. Gemäß Ausführungsbeispielen sind die erste Empfangsfläche und/ oder die zweite Empfangsfläche als sphärische, asphärische oder Freiformoptik ausgebildet.

Der von dem optischen Sender 202 abgestrahlte Sendestrahl 208 trifft auf den ersten Abschnitt 220a der Sendeoptik, der eine Ablenkung des Strahls in Richtung des zweiten Abschnitts 220b in Richtung der Drehachse 206 bewirkt, wie es in Fig. 2 durch den abgelenkten Strahl 208' dargestellt ist. Der Strahl 208' trifft auf den zweiten Abschnitt 220b der Sendeoptik, genauer gesagt auf die zweite Oberfläche 224b, die ihrerseits eine Ablenkung des Strahls 208' in Richtung der Drehachse 206 bewirkt, so dass sich ein Ausgangsstrahl 226 ergibt, der sich im Wesentlichen entlang der Drehachse 206 ausbreitet. Mit anderen Worten wird erfindungsgemäß eine Sendeoptik bereitgestellt, die den ersten Abschnitt 220a, der auch als erste Sendefläche bezeichnet wird, und den zweiten Abschnitt 220b, der auch als zweite Sendefläche bezeichnet wird, umfasst, wobei die zwei Sendeflächen 220a, 220b so in die Empfangsoptik 218 integriert sind, dass der Ausgangsstrahl 226 auf die Drehachse 206 verschoben wird, der Sendestrahl 208, 208' die Sende/Empfangs-Optik 214 also im Wesentlichen mittig oder zentral verlässt. Der Sendestrahl 208 wird durch die erste Sendefläche 220a in Richtung der Drehachse 206 gekippt und auf die zweite Sendefläche 220b gerichtet, die mittig bzw. zentral auf der Oberseite 218b der Sende/Empfangs-Einheit 214 gebildet bzw. angeordnet ist. Die zweite Sendefläche 220b kippt ihrerseits den abgelenkten Sendestrahl 208' in Richtung der Drehachse, so dass sich der parallel zu der Drehachse 206 angeordnete Ausgangsstrahl 226 ergibt. Die erfindungsgemäße Ausgestaltung führt dazu, dass die Lichtquelle 202 und die Fotodiode 204 virtuell auf der Drehachse 206 erscheinen, wodurch eine 360°-Drehung der Anordnung 200 möglich ist, ohne dass es zu Unterbrechungen der Verbindung kommt. Gemäß Ausführungsbeispielen sind Abweichungen von der Parallelität zur Drehachse möglich, so dass der Ausgangsstrahl 226 im Wesentlichen parallel zu der Drehachse 206 ist.

Gemäß Ausführungsbeispielen ist die erste Sendefläche 220a und die zweite Sendefläche 220b durch eine ebene Fläche gebildet, die vorzugsweise parallel zueinander angeordnet sind, um die seitliche Verschiebung des Sendestrahls 208 zu der Erzeugung des Ausgangsstrahls 226 zu bewirken, so dass ein Optikdesign für einen rotationsfähigen optischen Kurzstrecken-Transceiver für die optische drahtlose Datenübertragung nach dem Prinzip der planparallelen Platte geschaffen wird. Gemäß anderen Ausführungsbeispielen können die Sendeflächen 220a, 220b als sphärische, asphärische oder Freiformoptik ausgebildet sein, wodurch sich die Möglichkeit eröffnet, neben der oben genannten Verschiebung zusätzlich eine Strahlformung des Sendestrahls 208, 208' durchzuführen, um einen Ausgangsstrahl 226 mit erwünschter Form zu erhalten. Gemäß wiederum weiteren Ausführungsbeispielen ist vorgesehen, nur eine der Sendeflächen 220a, 220b bereitzustellen, und die Funktion der anderen Sendefläche durch eine passende Formgebung der Oberflächen 218a bzw. 218b der Empfangsoptik 218 zumindest an den Stellen, an denen der Sendestrahl 208, 208' empfangen wird, zu realisieren.

Erfindungsgemäß ist somit vorgesehen, die Empfangsoptik 218 und die Sendeoptik 220 so miteinander zu integrieren, dass eine gemeinsame oder einzige Sende/Empfangs-Optik oder Transceiver-Optik 214 entsteht, wobei die Empfangsoptik 218 den größten Teil der Sende/Empfangs-Optik 214 ausmacht. Wie nachfolgend noch näher erläutert wird, erlaubt die erfindungsgemäße Ausgestaltung der Sende/Empfangs-Einheit die Bereitstellung einer Datenübertragungsvorrichtung zur Datenübertragung von zueinander drehbaren Bauteilen mit einer Rotationsfähigkeit für eine 360°-Grad-Rotation auch bei sehr kurzen Abständen. Hierdurch ist eine zuverlässige und kontinuierliche Datenübertragung sichergestellt, und die bei herkömmlichen Ausgestaltungen von Sende/Empfangs-Einheiten angetroffenen Probleme, wie sie oben erläutert wurden, werden vermieden. Erfindungsgemäß ist vorgesehen, dass das elektrische Empfängerelement bzw. der optische Empfänger 204, der beispielsweise eine Fotodiode umfasst, auf der Drehachse 206 sitzt, und die Empfangsoptik 218 sitzt ebenfalls auf der Drehachse 206 über der Fotodiode 204, wie dies in Fig. 2 dargestellt ist. Die Photodiode umfasst zum Beispiel eine PIN Diode, eine Avalanche Diode, eine Metall-Semiconductor-Metall Diode oder ähnliches. Die Lichtquelle bzw. der optische Sender 202 befindet sich außermittig, also beabstandet von der Drehachse 206, benachbart zu der Fotodiode 204, also in unmittelbarer Nähe zu derselben. Der optische Sender 202 kann eine Laserquelle, wie z. B. eine Laserdiode, LD, oder eine inkohärente Lichtquelle, wie z.B. eine lichtemittierende Diode, LED, umfassen.

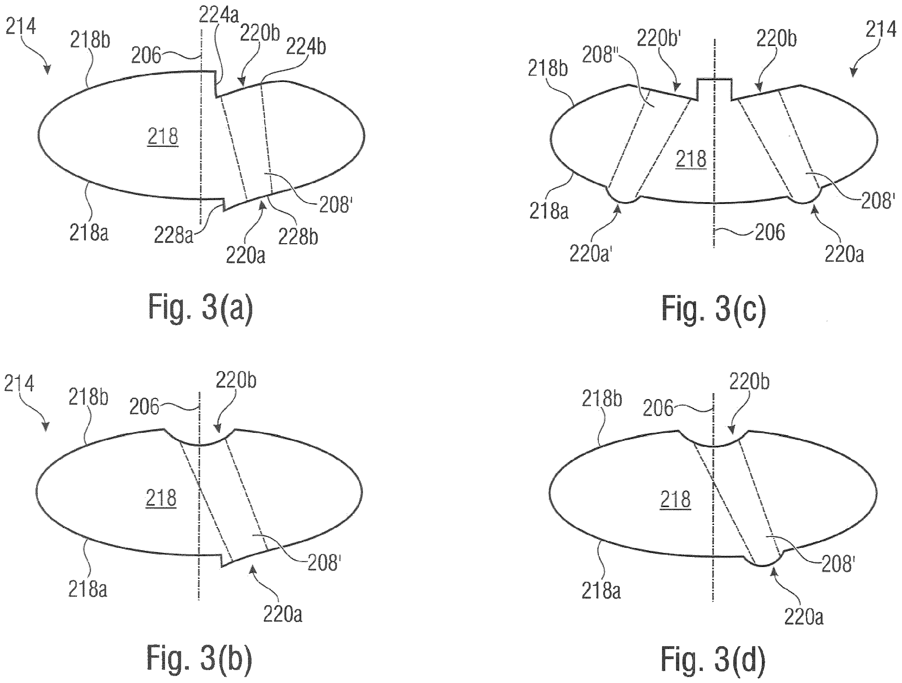

Fig. 2 ist ein Ausführungsbeispiel dargestellt, bei dem der erste Abschnitt 220a der Sendeoptik dadurch definiert ist, dass ein Abschnitt der unteren Oberfläche 218a der Empfangsoptik 218, der der Lichtquelle 202 gegenüberliegt, konvex ausgebildet ist, wohingegen der zweite Abschnitt 220b der Sendeoptik durch eine Ausnehmung in der oberen Oberfläche 218b der Sendeoptik 218 gebildet ist, wobei die Ausnehmung zentral angeordnet ist. Die vorliegende Erfindung ist nicht auf die Ausgestaltung der Sende/Empfangs-Optik 214 gemäß dem in Fig. 2 dargestellten Ausführungsbeispiel beschränkt, vielmehr kann die Sende/Empfangs-Einheit auch anders ausgestaltet sein. Fig. 3(a) bis Fig. 3(d) zeigen weitere Ausführungsformen für die Sende/Empfangs-Optik 214.

Fig. 3(a) zeigt eine Ausgestaltung der Sende/Empfangs-Optik 214, bei der der zweite Abschnitt 220b so ausgestaltet ist, wie es anhand der Fig. 2 erläutert wurde, allerdings ist der Abschnitt 220b der Sendeoptik nicht mehr zentral im Bereich der Empfangsoptik 218 angeordnet, sondern bezüglich der Drehachse 206 seitlich versetzt. Der erste Abschnitt 220a der Sendeoptik ist bei dem in Fig. 3(a) dargestellten Ausführungsbeispiel ähnlich ausgestaltet wie der zweite Abschnitt 220b, nämlich durch eine erste Oberfläche 228a, die sich parallel zu der Drehachse 206 senkrecht von der unteren Oberfläche 218a der Empfangsoptik 218 erstreckt. Eine zweite Oberfläche 228b erstreckt sich ausgehend vom unteren Ende der ersten Oberfläche 228a zu der unteren Oberfläche 218a der Empfangsoptik 218. Ähnlich der oben erwähnten Oberfläche 224a ist auch die Oberfläche 228a lediglich eine Verbindungsfläche, um die Sende- und Empfangsfläche zu verbinden, hat aber keinen optischen Nutzen. Vorzugsweise sind die Oberflächen 224b und 228b der zwei Abschnitte 220a, 220b der Sendeoptik parallel zueinander ausgerichtet, um die Verkippung des Sendestrahls 208' in Richtung der Drehachse 206 zu bewirken und den Ausgangsstrahl 226 zu erzeugen, der sich entlang der Drehachse in unmittelbarer Nähe zu derselben oder teilweise überlappend mit der Drehachse 206 erstreckt, so dass auch bei dem in Fig. 3(a) dargestellten Ausführungsbeispiel die Lichtquelle 202 und der optische Empfänger 204 virtuell in einem gemeinsamen Bereich um die Drehachse 206 herum zumindest teilweise überlappend erscheinen.

Fig. 3(b) zeigt eine weitere Ausgestaltung für die Sende/Empfangs-Optik 214, bei der der erste Abschnitt 220a der Sendeoptik ausgestaltet ist, wie anhand der Fig. 3(a) erläutert wurde. Der zweite Abschnitt 220b der Sendeoptik ist zentral in der oberen Oberfläche 218b der Empfangsoptik 218 durch eine konvexe Vertiefung gebildet.

Fig. 3(c) zeigt eine weitere Ausführungsform der Sende/Empfangs-Optik 214, bei der die Sendeoptik zusätzliche Abschnitte enthält, beispielsweise wenn die Anordnung 200 gemäß Fig. 2 zusätzliche Lichtquellen aufweist, In Fig. 3(c) sind die jeweiligen Abschnitte 220a, 220a' und 220b, 220b' der Sendeoptiken versetzt zu der Drehachse 206 angeordnet und haben eine Struktur, wie sie anhand der Fig. 2 erläutert wurde.

Fig. 3(d) zeigt eine wiederum weitere Ausführungsform für die Sende/Empfangs-Optik 214, bei der der erste Abschnitt 220a der Sendeoptik so ausgebildet ist, wie es anhand der Fig. 2 erläutert wurde, und der zweite Abschnitt 220b der Sendeoptik ist ausgestaltet, wie es anhand der Fig. 3(b) erläutert wurde.

Bei den anhand der Fig. 2 und Fig. 3(b) bis Fig. (d) beschriebenen Ausführungsbeispielen sind der erste und/oder der zweite Abschnitt 220b der Sendeoptik ausgestaltet, um zusätzlich zu der Ablenkung des Sendestrahls auch eine Strahlformung zu bewirken, um eine erwünschte Form des Ausgangsstrahls 226 herbeizuführen.

Hinsichtlich der oben beschriebenen Ausführungsbeispiele zu der Ausbildung bzw. Ausformung der zwei Abschnitte 220a, 220b der Sendeoptik wird darauf hingewiesen, dass die jeweiligen Ausgestaltungen auch auf andere Art und Weise kombiniert werden können, so dass die vorliegende Erfindung nicht auf die dargestellten Ausführungsbeispiele beschränkt ist.

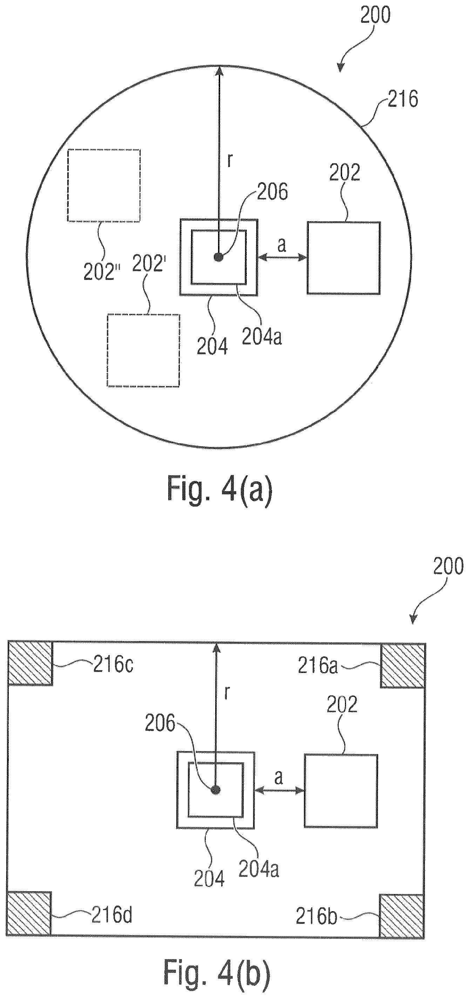

Die in Fig. 2 dargestellte Sende/Empfangs-Einheit 200 kann in Draufsicht unterschiedliche Formen aufweisen. Fig. 4 zeigt zwei Ausführungsbeispiele für die Ausgestaltung der Sende/Empfangs-Einheit in Draufsicht, wobei Fig. 4(a) eine runde bzw. kreisförmige Ausgestaltung der Sende/Empfangs-Einheit 200 und Fig. 4(b) eine rechteckige oder quadratische Ausgestaltung der Sende/Empfangs-Einheit 200 darstellt. Für einen Fachmann ist offensichtlich, dass die Sende/Empfangs-Einheit 200 eine beliebige, z.B. vieleckige, Form haben kann.

Fig. 4(a) zeigt eine kreisförmige Sende/Empfangs-Einheit 200, mit einem Radius r, der von der Drehachse 206 bis zur kreisförmig ausgestalteten Halterung 216 für die Sende/Empfangs-Optik 214, nicht dargestellt, gemessen ist. In Fig. 4(a) ist ferner ein weiteres Ausführungsbeispiel angedeutet, gemäß dem eine oder mehrere zusätzliche optische Sender 202', 202" im gleichen oder mit einem anderen Abstand zur optischen Empfangseinrichtung 204 vorgesehen sein können. Bei dem in Fig. 4(a) dargestellten Ausführungsbeispiel ist die Halterung 216 umlaufend dargestellt, kann aber auch durch einzelne Stützen oder Ähnliches zur Halterung der Sende/Empfangs-Optik 214 ausgebildet sein.

Sofern gemäß Ausführungsbeispielen ein oder mehrere zusätzliche optische Sender 202', 202" vorgesehen sind, umfasst die erfindungsgemäß ausgestaltete Sende/Empfangs-Optik 214 zusätzliche Sendeoptiken, die in die Empfangsoptik 218 integriert sind, wie dies beispielhaft in der Fig. 3(c) dargestellt ist. Die zusätzliche Sendeoptik ist oberhalb des optischen Senders 220' angeordnet und umfasst die Abschnitte 220a' und 220b' zur Verkippung/Umlenkung und ggf. zur Strahlformung des Sendestrahls bereit, der durch die zusätzliche optische Sendeeinheit 202' bereitgestellt wird. Die zusätzliche Sendeoptik kann gemäß anderen Ausführungsbeispielen ähnlich ausgestaltet sein wie die Sendeoptik 220, also in Form der in Fig. 3(a), Fig. 3(b) oder Fig. 3(d) dargestellten Ausführungsbeispiele.

Fig. 4(b) zeigt eine rechteckige Ausgestaltung der Sende/Empfangs-Einheit 200, wobei der Abstand von der Drehachse 206 zum Rand der Einheit 200 als Radius r bezeichnet wird. Bei diesem Ausführungsbeispiel umfasst die Halterung 216 zum Tragen der Sende/Empfangs-Optik 214 vier, an den Ecken angeordnete Stützen 216a bis 216d, die bei anderen Ausführungsbeispielen natürlich auch anders angeordnet sein können.

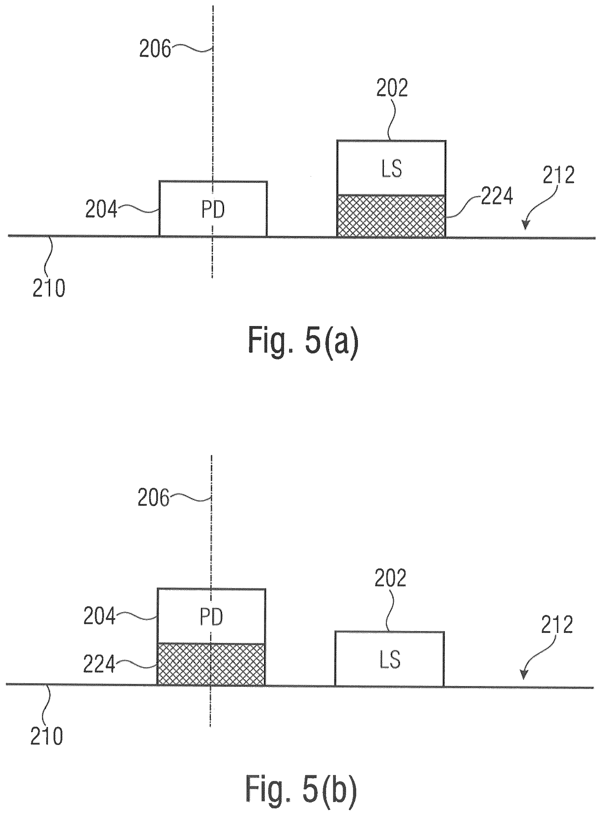

Bei dem anhand der Fig. 2 dargestellten Ausführungsbeispiel sind der optische Sender 202 und der optische Empfänger 204 beide auf der Oberfläche 212 des Trägers 210 angeordnet. Die vorliegende Anmeldung ist jedoch nicht auf eine solche Anordnung beschränkt, vielmehr können die Elemente 202, 204 mit gleichen oder unterschiedlichen Abständen zur Oberfläche 212 angeordnet sein. Fig. 5 zeigt mögliche Ausführungsformen für eine solche Ausgestaltung, wobei Fig. 5(a) eine Ausgestaltung darstellt, bei der der optische Sender 202 mittels eines geeigneten Abstandselements 224 beabstandet von der Trägeroberfläche 212 angeordnet ist, wohingegen sich der optische Empfänger 204 auf der Trägeroberfläche 212 befindet. Fig. 5(b) zeigt ein anderes Ausführungsbeispiel, bei dem der optische Empfänger 204 unter Verwendung eines geeigneten Abstandshalters 224 beabstandet von der Oberfläche 212 des Trägers 210 angeordnet ist, wohingegen der optische Sender 202 auf der Oberfläche 212 angeordnet ist. Bei wiederum anderen Ausführungsbeispielen kann, wie erwähnt, sowohl der optische Sender 202 als auch der optische Empfänger 204 mit einem geeigneten Abstandshalter 224 beabstandet von der Oberfläche des Trägers angeordnet sein, wobei die Abstände für den optischen Sender und für den optischen Empfänger gleich oder unterschiedlich sein können.

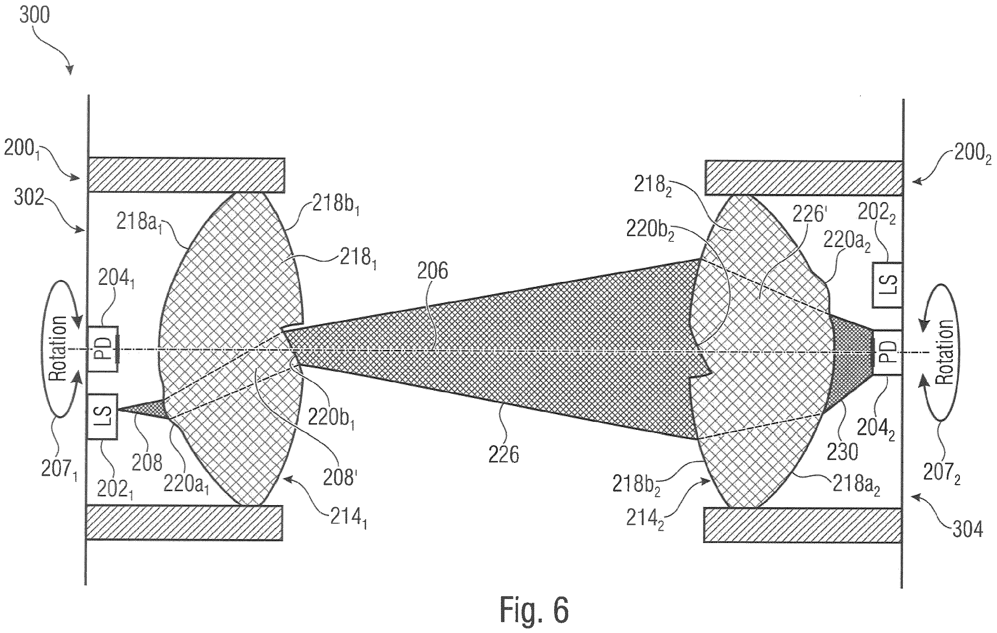

Nachfolgend werden Ausführungsbeispiele für eine Signalübertragungseinrichtung unter Verwendung der erfindungsgemäßen Sende/Empfangs-Einheiten, wie sie beispielsweise anhand der Fig. 2 bis Fig. 5 erläutert wurden, näher beschrieben. Fig. 6 zeigt ein Ausführungsbeispiel für eine Signalübertragungseinrichtung 300, welche zwei zueinander drehbar angeordnete Bauteile 302, 304 aufweist, die jeweils mit einer erfindungsgemäß ausgestalteten Sende/Empfangs-Einheit 200₁ bzw. 200₂ versehen sind, um eine drahtlose, optische Datenübertragung zwischen den zwei zueinander drehbar angeordneten Bauteilen 302, 304 zu ermöglichen. In Fig. 6 sind die anhand der Fig. 2 beschriebenen Elemente der Sende/Empfangs-Einheit 200₁ dargestellt, und die Bezugszeichen sind mit dem Subskript "1" versehen und werden nicht erneut beschrieben. Ebenso ist die Sende/Empfangs-Einheit 200₂, die dem zweiten Bauteil 304 zugeordnet ist, dargestellt und die entsprechenden, anhand der Fig. 2 beschriebenen Bauteile sind mit den gleichen Bezugszeichen mit dem Subskript "2" versehen und werden ebenfalls nicht erneut beschrieben. Während der Datenübertragung können einer oder beide Transceiver permanent gegeneinander rotiert werden.

Fig. 6 zeigt beispielhaft eine Datenübertragung vom ersten Bauteil 302 zu dem zweiten Bauteil 304, also eine unidirektionale Verbindung bzw. einen unidirektionaler Link, wobei gemäß anderen Ausführungsbeispielen eine gleichzeitige Übertragung in beiden Richtungen ebenfalls möglich ist. Wie in Fig. 6 dargestellt ist, sind die Abschnitte 220a, und 220b₁ der Sendeoptik der sendenden Sende/Empfangs-Einheit 200₁ ausgestaltet, um den Sendestrahl 208 in den Ausgangsstrahl 226 derart zu formen, dass sich der Ausgangsstrahl 226 die Sende/Empfangs-Optik 214₁ der sendenden Sende/Empfangs-Einheit 200₁ in einem zentralen Bereich um die Drehachse herum verlässt und auf die Sende/Empfangs-Optik 214₂ der empfangenen Sende/Empfangs-Einheit 200₂ gerichtet ist bzw. die Sende/Empfangs-Optik beleuchtet. Gemäß Ausführungsbeispielen kann die empfangene Sende/Empfangs-Einheit 200₂, die auch als Empfangstransceiver bezeichnet werden kann, von der optischen Z-Achse, mit der die Drehachse 206 zusammenfällt, in X-Richtung und/oder Y-Richtung verschoben sein, wobei der Grad der Verschiebbarkeit vom genauen Entwurf der Sende- und Empfangsoptik abhängt. Gemäß Ausführungsbeispielen kann der Versatz zwischen 0 und größer als ein Radius der Sende/Empfangs-Optik sein. Der vom Sendetransceiver bzw. von der sendenden Sende/Empfangs-Einheit 200₁ bereitgestellte und auf die Empfangsoptik 218₂ gerichtete Strahl 226 wird von der Transceiver-Optik 214₂ des Empfangstransceivers 200₂ eingesammelt und durch die erste Empfangsfläche 218a₂ und die zweite Empfangsfläche 218b₂ in Richtung der Fotodiode 204b gelenkt bzw. fokussiert, wobei der Bereich des zweiten Abschnitts 202b₂ der Sendeoptik nicht für die Fokussierung benutzt werden kann. Der erste Abschnitts 202a₂ der Sendeoptik ist von der Drehachse 206 beabstandet angeordnet und hat keinen Einfluss auf die Fokussierung. Fig. 6 zeigt den von der Sende/Empfangs-Optik 214₂ erzeugten Empfangsstrahl 230, der auf die Photodiode 204₂ fokussiert ist. Bei anderen Ausführungsbeispielen liegt der erste Abschnitt 202a₂ im genutzten Bereich der Empfangsfläche 218a₂ , was zu einer geringfügigen und daher akzeptablen Reduzierung der Empfangsleistung führen kann. Der von der Empfangsfläche 220b₂ umgelenkte Strahl ist nicht dargestellt.

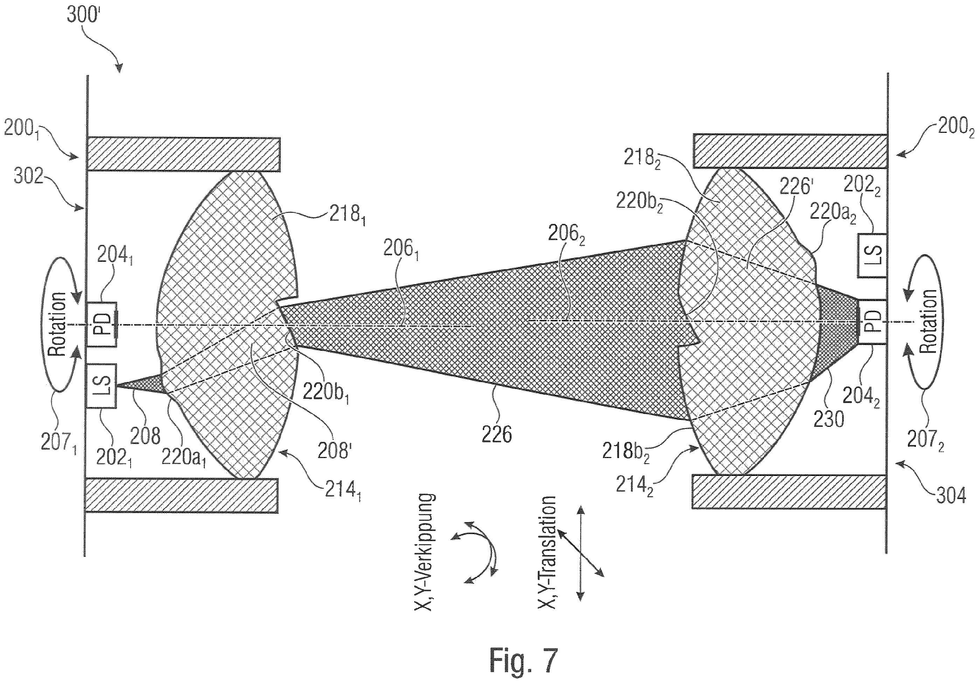

In Fig. 6 ist eine Anordnung der zwei Sende/Empfangs-Einheiten 200₁ bzw. 200₂ dargestellt, die derart ist, dass beide Einheiten auf der gleichen optischen Achse liegen, nämlich der in Fig. 6 dargestellten gemeinsamen optischen Achse oder gemeinsamen Drehachse 206. Die vorliegende Erfindung ist allerdings nicht auf solche Ausgestaltungen beschränkt. Jeder Transceiver hat seine eigene Drehachse. Diese Drehachsen können identisch sein (siehe Fig. 6), typischerweise sind die Drehachsen aber nicht identisch. Die beiden Drehachsen können, in einem gewissen Rahmen, gegeneinander verschoben oder auch verkippt sein, so dass gemäß weiteren Ausführungsbeispielen die Sende/Empfangs-Einheiten 200₁, 200₂ zueinander versetzt sind, so dass diese keine gemeinsame optische Achse bzw. gemeinsame Drehachse aufweisen. Fig. 7 zeigt eine Ausgestaltung ähnlich zu der in Fig. 6, wobei gleiche Elemente mit den gleichen Bezugszeichen versehen sind und nicht erneut beschrieben werden. Bei dem in Fig. 7 gezeigten Ausführungsbeispiel sind die Sende/Empfangs-Einheiten 200₁, 200₂ mit einem Versatz zueinander angeordnet, wie dies durch das Bezugszeichen 350 angedeutet ist, beispielsweise ist die zweite Sende/Empfangs-Einheit 200₂ in X- und Y-Richtung verkippt angeordnet, so dass die optischen Achsen bzw. Drehachsen 206₁, 206₂ der zwei Einheiten nicht mehr übereinstimmen, und einen entsprechenden Versatz aufweisen. Die optische Achse bzw. Drehachse 206₁ der ersten Sende/Empfangs-Einheit 200₁ ist bezüglich der optischen Achse bzw. Drehachse 206₂ der zweiten Sende/Empfangs-Einheit 200₂ versetzt, wie aus Fig. 7 ersichtlich ist.

Der Abstand der Sende/Empfangs-Einheiten 200₁, 200₂, die in einer Vorrichtung entsprechend den Fig. 6 und Fig. 7 angeordnet sind, kann, anders als beim Stand der Technik, gering gehalten werden, beispielsweise kleiner als der Durchmesser der Sende/EmpfangsEinheiten, da aufgrund der erfindungsgemäßen Ausgestaltung der Sende/Empfangs-Einheiten auch bei geringem Abstand und einer Verdrehung der Sende/Empfangs-Einheiten 200₁, 200₂ zueinander stets der Sendestrahl 226, der von der sendenden Einheit bereitgestellt wird, auf die Empfangsoptik der empfangenen Einheit auftrifft, die das auftreffende Licht auf die Fotodiode leitet, so dass auch bei geringerem Abstand und einer Verdrehung eine zuverlässige Datenübertragung bzw. Datenverbindung auch bei einer Verdrehung sichergestellt ist.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Optische Sende/Empfangs-Einheit (200), mit:
einem Träger (210), der um eine Drehachse (206) drehbar ist,
einem optischen Empfänger (204), der an dem Träger (210) auf der Drehachse (206) angeordnet ist, um ein optisches Empfangssignal (226) aus einer ersten Richtung zu empfangen,
einem optischen Sender (202), der benachbart zu dem optischen Empfänger (204) an dem Träger (210) angeordnet ist, um ein optisches Sendesignal (208) in einer zweiten Richtung auszusenden, und
einer Sende/Empfangs-Optik (214), die an dem Träger (210) auf der Drehachse (206) oberhalb des optischen Empfängers (204) angeordnet ist und sich über den optischen Empfänger (204) und den optischen Sender (202) erstreckt, wobei die Sende/Empfangs-Optik (214) eine Empfangsoptik (218) und eine in die Empfangsoptik (218) integrierte Sendeoptik umfasst,
wobei die Empfangsoptik (218) ausgebildet ist, um das auf die Sende/Empfangs-Optik (214) auftreffende optische Empfangssignal (226) in Richtung des optischen Empfängers (204) auf der Drehachse (206) zu lenken, und
wobei die Sendeoptik ausgebildet ist, um das von dem optischen Sender (202) ausgesendete optische Sendesignal (208) auf die Drehachse (206) zu lenken, so dass sich ein Sendestrahl (226) von der Sende/Empfangs-Optik (214) entlang der Drehachse (206) ausbreitet,
**dadurch gekennzeichnet, dass**
die Sendeoptik durch einen Abschnitt (220b) einer dem optischen Empfänger (204) abgewandten Oberfläche (218b) der Empfangsoptik (218) gebildet ist,
der Abschnitt (220b) ausgebildet ist, um das von einer Sendefläche (228b) empfangene optische Sendesignal (208) in eine Richtung parallel zu der Drehachse (206) abzulenken,
der Abschnitt (220b) durch eine Ausnehmung in der dem optischen Empfänger (204) abgewandten Oberfläche (218b) der Empfangsoptik (218) gebildet ist, und
die Funktion der Sendefläche (228b) durch eine passende Formgebung der dem optischen Empfänger (204) zugewandten Oberfläche (218a) der Empfangsoptik (218) realisiert ist.

2. Optische Sende/Empfangs-Einheit (200) gemäß Anspruch 1, bei der die Sendeoptik ferner durch einen weiteren Abschnitt (220a) einer dem optischen Empfänger (204) zugewandten Oberfläche (218a) der Empfangsoptik (218) gebildet ist,
wobei der weitere Abschnitt (220a) ausgebildet ist, um das von dem optischen Sender (202) ausgesendete optische Sendesignal (208) in Richtung auf die Drehachse (206) abzulenken und auf den Abschnitt (220b) zu richten.

3. Optische Sende/Empfangs-Einheit (200) gemäß Anspruch 2, bei der der weitere Abschnitt (220a) in einer Richtung, entlang der der optische Sender (202) das optische Sendesignal (208) aussendet, beabstandet von dem optischen Sender (202) angeordnet ist.

4. Optische Sende/Empfangs-Einheit (200) gemäß einem der vorhergehenden Ansprüche, bei der der Abschnitt (220b) auf der Drehachse (206) oder benachbart zu der Drehachse (206) angeordnet ist.

5. Optische Sende/Empfangs-Einheit (200) gemäß einem der vorhergehenden Ansprüche, bei der der weitere Abschnitt (220a) durch einen Vorsprung in der dem optischen Empfänger (204) zugewandten Oberfläche (218a) der Empfangsoptik (218) gebildet ist.

6. Optische Sende/Empfangs-Einheit (200) gemäß einem der vorhergehenden Ansprüche, bei der
die Ausnehmung eine erste Oberfläche (224a) aufweist, die sich ausgehend von der dem optischen Empfänger (204) abgewandten Oberfläche (218b) parallel zu der Drehachse (206) in die Empfangsoptik (218) erstreckt, und
die Ausnehmung eine zweite Oberfläche (224b) aufweist, die an die erste Oberfläche (224a) angrenzt und sich ausgehend von der ersten Oberfläche (224a) unter einem Winkel kleiner oder gleich 90° bezüglich des Trägers (210) zu der dem optischen Empfänger (204) abgewandten Oberfläche (218b) erstreckt.

7. Optische Sende/Empfangs-Einheit (200) gemäß Anspruch 6, bei der
die erste Oberfläche (224a) benachbart zu der Drehachse (206) angeordnet ist, und die zweite Oberfläche (224b) die Drehachse (206) schneidet, oder
die erste Oberfläche (224a) benachbart zu der Drehachse (206) angeordnet ist, und die zweite Oberfläche (224b) sich von der Drehachse (206) weg erstreckt.

8. Optische Sende/Empfangs-Einheit (200) gemäß einem der vorhergehenden Ansprüche, bei der
der weitere Abschnitt (220a) die Sendefläche (228b) aufweist, die oberhalb des optischen Senders angeordnet ist und das von dem optischen Sender (202) ausgesendete optische Sendesignal (208) in Richtung der Drehachse (206) lenkt, und
der Abschnitt (220b) eine weitere Sendefläche (224b) aufweist, die zentral auf der dem optischen Empfänger (204) abgewandten Oberfläche (218b) der Empfangsoptik (218) angeordnet ist und das von der Sendefläche (228b) empfangene optische Sendesignal (208) parallel zu der Drehachse (206) lenkt.

9. Optische Sende/Empfangs-Einheit (200) gemäß Anspruch 8, bei der
die Sendefläche (228b) und die weitere Sendefläche (224b) jeweils eine ebene Fläche aufweisen, die parallel zueinander sind, um eine seitliche Verschiebung des optischen Sendesignals (208) zu der Drehachse (206) zu bewirken.

10. Optische Sende/Empfangs-Einheit (200) gemäß Anspruch 8, bei der die Sendefläche (228b) und die weitere Sendefläche (224b) als sphärische, asphärische oder Freiformoptik ausgebildet sind, um neben einer seitlichen Verschiebung des optischen Sendesignals (208) zu der Drehachse (206) auch eine Strahlformung des optischen Sendesignals (208) zu bewirken, um einen erwünschten Sendestrahl (226) zu erhalten.

11. Optische Sende/Empfangs-Einheit (200) gemäß einem der Ansprüche 1 bis 7, bei der der weitere Abschnitt (220a) die Sendefläche (228b) aufweist, die oberhalb des optischen Senders angeordnet ist und das von dem optischen Sender (202) ausgesendete optische Sendesignal (208) in Richtung der Drehachse (206) lenkt.

12. Optische Sende/Empfangs-Einheit (200) gemäß Anspruch 11, bei der die Sendefläche (228b) als sphärische, asphärische oder Freiformoptik ausgebildet ist, um eine Strahlformung des optischen Sendesignals (208) zu bewirken, um einen erwünschten Sendestrahl (226) zu erhalten

13. Optische Sende/Empfangs-Einheit (200) gemäß einem der vorhergehenden Ansprüche, mit zumindest einem weiteren optischen Sender (202', 202"), der benachbart zu dem optischen Empfänger (204) an dem Träger (210) angeordnet ist, wobei die Sende/Empfangs-Optik (214) zumindest eine weitere Sendeoptik aufweist, die in der Empfangsoptik (218) angeordnet oder integriert ist.

14. Optische Sende/Empfangs-Einheit (200) gemäß einem der vorhergehenden Ansprüche, bei der
die Empfangsoptik eine erste Empfangsfläche auf der dem optischen Empfänger (204) zugewandten Oberfläche (218a) der Empfangsoptik (218) und eine zweite Empfangsfläche auf der dem optischen Empfänger (204) abgewandten Oberfläche (218b) der Empfangsoptik (218) aufweist,
wobei die erste Empfangsfläche und die zweite Empfangsfläche als sphärische, asphärische oder Freiformoptik ausgebildet sind.

15. Vorrichtung (300) zur Signalübertragung, mit
zumindest einer ersten optischen Sende/Empfangs-Einheit (200a) gemäß einem der vorhergehenden Ansprüche; und
zumindest einer zweiten optischen Sende/Empfangs-Einheit (200b) gemäß einem der vorhergehenden Ansprüche;
wobei die erste und die zweite optischen Sende/Empfangs-Einheit (200a, 200b) derart zueinander angeordnet sind, dass ein Sendestrahl (226) einer Sende/Empfangs-Einheit (200a) die Empfangsoptik einer gegenüberliegenden Sende/Empfangs-Einheit (200b) beleuchtet.

## Claims

1. An optical transmission/reception unit (200), comprising:
a carrier (210) rotatable around an axis of rotation (206),
an optical receiver (204) arranged at the carrier (210) on the axis of rotation (206) so as to receive an optical reception signal (226) from a first direction,
an optical transmitter (202) arranged at the carrier (210) adjacent to the optical receiver (204) so as to emit an optical transmission signal (208) in a second direction, and
transmission/reception optics (214) arranged at the carrier (210) on the axis of rotation (206) above the optical receiver (204) and extending across the optical receiver (204) and the optical transmitter (202), wherein the transmission/reception optics (214) include reception optics (218) and transmission optics integrated in the reception optics (218),
wherein the reception optics (218) are configured to guide the optical reception signal (226) striking the transmission/reception optics (214) towards the optical receiver (204) on the axis of rotation (206), and
wherein the transmission optics are configured to guide the optical transmission signal (208) emitted by the optical transmitter (202) onto the axis of rotation (206) so that a transmission beam (226) propagates from the transmission/reception optics (214) along the axis of rotation (206),
**characterized in that**
the transmission optics are formed by a portion (220b) of a surface (218a) of the reception optics (218) facing away from the optical receiver (204),
the second portion (220b) is configured to deflect the optical transmission signal (208) received from a transmission face (228b) in parallel to the axis of rotation (206),
the portion (220b) is formed by a recess in the surface (218a) of the reception optics (218) facing away from the optical receiver (204), and
the function of the transmission face (228b) is realized by suitable shaping of the surface (218a) of the reception optics (218) facing away from the optical receiver (204).

2. The optical transmission/reception unit (200) according to claim 1, wherein the transmission optics are further formed by a further portion (220a) of a surface (218a) of the reception optic (218) facing the optical receiver (204),
wherein the further portion (220a) is configured to deflect the optical transmission signal (208) emitted by the optical transmitter (202) towards the axis of rotation (206), and to direct the same onto the portion (220b).

3. The optical transmission/reception unit (200) according to claim 2, wherein the further portion (220a) is arranged to be spaced apart from the optical transmitter (202) in a direction along which the optical transmitter (202) emits the optical transmission signal (208).

4. The optical transmission/reception unit (200) according to any of the preceding claims, wherein the portion (220b) is arranged on the axis of rotation (206) or adjacent to the axis of rotation (206).

5. The optical transmission/reception unit (200) according to any of the preceding claims, wherein the further portion (220a) is formed by a projection in the surface (218a) of the reception optic (218) facing the optical receiver (204).

6. The optical transmission/reception unit (200) according to any of the preceding claims, wherein
the recess comprises a first surface (224a) extending, starting from the surface (218b) facing away from the optical receiver (204), in parallel to the axis of rotation (206) into the reception optics (218), and
the recess comprises a second surface (224b) adjacent to the first surface (224a) and extending, starting from the first surface (224a), at an angle of less than or equal to 90° with respect to the carrier (210) towards the surface (218b) facing away from the optical receiver (204).

7. The optical transmission/reception unit (200) according to claim 6, wherein
the first surface (224a) is arranged adjacent to the axis of rotation (206) and the second surface (224b) intersects the axis of rotation (206), or
the first surface (224a) is arranged adjacent to the axis of rotation (206) and the second surface (224b) extends away from the axis of rotation (206).

8. The optical transmission/reception unit (200) according to any of the preceding claims, wherein
the further portion (220a) comprises the transmission face (228b) arranged above the optical transmitter and guiding the optical transmission signal (208) emitted by the optical transmitter (202) towards the axis of rotation (206), and
the portion (220b) comprises a further transmission face (224b) arranged centrally on the surface (218b) of the reception optic (218) facing away from the optical receiver (204) and guiding the optical transmission signal (208) received from the transmission face (228b) in parallel to the axis of rotation (206).

9. The optical transmission/reception unit (200) according to claim 8, wherein
the transmission face (228b) and the further transmission face (224b) each comprise a plane face in parallel with each other so as to cause a lateral displacement of the optical transmission signal (208) towards the axis of rotation (206).

10. The optical transmission/reception unit (200) according to claim 8, wherein the transmission face (228b) and the further transmission face (224b) are configured as spherical, aspherical or free-form optics so as to also cause, beside a lateral displacement of the optical transmission signal (208) towards the axis of rotation (206), beam shaping of the optical transmission signal (208) in order to obtain a desired transmission beam (226).

11. The optical transmission/reception unit (200) according to any of claims 1 to 7, wherein the further portion (220a) comprises the transmission face (228b) arranged above the optical transmitter and guiding the optical transmission signal (208) emitted by the optical transmitter (202) towards the axis of rotation (206).

12. The optical transmission/reception unit (200) according to claim 11, wherein the transmission face (228b) is configured as spherical, aspherical or free-form optics so as to cause beam shaping of the optical transmission signal (208) in order to obtain a desired transmission beam (226).

13. The optical transmission/reception unit (200) according to any of the preceding claims, comprising at least one further optical transmitter (202', 202") arranged at the carrier (210) adjacent to the optical receiver (204), wherein the transmission/reception optics (214) comprise at least one further transmission optics arranged in the reception optics (218) or integrated therein.

14. The optical transmission/reception unit (200) according to any of the preceding claims, wherein
the reception optics comprise a first reception face on the surface (218a) of the reception optic (218) facing the optical receiver (204), and a second reception face on the surface (218b) of the reception optic (218) facing away from the optical receiver (204),
wherein the first reception face and the second reception face are configured as spherical, aspherical or free-form optics.

15. An apparatus (300) for a signal transfer, comprising
at least one first optical transmission/reception unit (200a) according to any of the preceding claims; and
at least one second optical transmission/reception unit (200b) according to any of the preceding claims;
wherein the first and second optical transmission/reception units (200a, 200b) are arranged in such a way with respect to each other that a transmission beam (226) of a transmission/reception unit (200a) illuminates the receiver optics of an opposite transmission/reception unit (200b).

## Revendications

1. Unité optique d'émission/de réception (200), avec:
un support (210) qui peut tourner autour d'un axe de rotation (206),
un récepteur optique (204) qui est disposé sur le support (210) sur l'axe de rotation (206), destiné à recevoir un signal de réception optique (226) provenant d'une première direction,
un émetteur optique (202) disposé à proximité du récepteur optique (204) sur le support (210), destiné à émettre un signal de transmission optique (208) dans une deuxième direction, et
une optique d'émission/de réception (214) qui est disposée sur le support (210) sur l'axe de rotation (206) au-dessus du récepteur optique (204) et qui s'étend sur le récepteur optique (204) et l'émetteur optique (202), où l'optique d'émission/réception (214) comporte une optique de réception (218) et une optique d'émission intégrée dans l'optique de réception (218),
dans laquelle l'optique de réception (218) est conçue pour diriger le signal de réception optique (226) arrivant sur l'optique d'émission/ réception (214) en direction du récepteur optique (204) sur l'axe de rotation (206), et
dans laquelle l'optique d'émission est conçue pour diriger le signal d'émission optique (208) émis par l'émetteur optique (202) sur l'axe de rotation (206), de sorte qu'un faisceau d'émission (226) se propage à partir de l'optique d'émission/réception (214) le long de l'axe de rotation (206),
**caractérisée par le fait que**
l'optique d'émission est formée par un segment (220b) d'une surface (218b) de l'optique de réception (218) opposée au récepteur optique (204),
le segment (220b) est conçu pour dévier le signal d'émission optique (208) reçu d'une surface d'émission (228b) dans une direction parallèle à l'axe de rotation (206),
le segment (220b) est formé par un évidement dans la surface (218b) de l'optique de réception (218) opposée au récepteur optique (204), et
la fonction de la surface d'émission (228b) est réalisée par une formation appropriée de la surface (218a) de l'optique de réception (218) orientée vers le récepteur optique (204).

2. Unité optique d'émission/de réception (200) selon la revendication 1, dans laquelle l'optique d'émission est par ailleurs formée par un autre segment (220a) d'une surface (218a) de l'optique de réception (218) orientée vers le récepteur optique (204),
dans laquelle l'autre segment (220a) est conçu pour diriger le signal d'émission optique (208) émis par l'émetteur optique (202) en direction de l'axe de rotation (206) et pour le diriger vers le segment (220b).

3. Unité optique d'émission/de réception (200) selon la revendication 2, dans laquelle l'autre segment (220a) est disposé dans une direction, le long de laquelle l'émetteur optique (202) émet le signal d'émission optique (208), distante de l'émetteur optique (202).

4. Unité optique d'émission/de réception (200) selon l'une des revendications précédentes, dans laquelle le segment (220b) est disposé sur l'axe de rotation (206) ou à proximité de l'axe de rotation (206).

5. Unité optique d'émission/de réception (200) selon l'une des revendications précédentes, dans laquelle l'autre segment (220a) est formé par une saillie dans la surface (218a) de l'optique de réception (218) orientée vers le récepteur optique (204).

6. Unité optique d'émission/de réception (200) selon l'une des revendications précédentes, dans laquelle
l'évidement présente une première surface (224a) qui, en partant de la surface (218b) opposée au récepteur optique (204), s'étend de manière parallèle à l'axe de rotation (206) dans l'optique de réception (218), et
l'évidement présente une deuxième surface (224b) qui est adjacente à la première surface (224a) et qui s'étend, en partant de la première surface (224a), selon un angle inférieur ou égal à 90° par rapport au support (210), vers la surface (218b) opposée au récepteur optique (204).

7. Unité optique d'émission/de réception (200) selon la revendication 6, dans laquelle
la première surface (224a) est disposée à proximité de l'axe de rotation (206), et la deuxième surface (224b) vient en intersection avec l'axe de rotation (206), ou
la première surface (224a) est disposée à proximité de l'axe de rotation (206), et la deuxième surface (224b) s'étend en s'éloignant de l'axe de rotation (206).

8. Unité optique d'émission/de réception (200) selon l'une des revendications précédentes, dans laquelle
l'autre segment (220a) présente la surface d'émission (228b) qui est disposée au-dessus de l'émetteur optique et qui dirige le signal d'émission optique (208) émis par l'émetteur optique (202) en direction de l'axe de rotation (206), et
le segment (220b) présente une autre surface d'émission (224b) qui est disposée de manière centrale sur la surface (218b) de l'optique de réception (218) opposée au récepteur optique (204) et dirige le signal d'émission optique (208) reçu de la surface d'émission (228b) de manière parallèle à l'axe de rotation (206).

9. Unité optique d'émission/de réception (200) selon la revendication 8, dans laquelle
la surface d'émission (228b) et l'autre surface d'émission (224b) présentent, chacune, une surface plane qui sont parallèles l'une à l'autre pour provoquer un déplacement latéral du signal d'émission optique (208) vers l'axe de rotation (206).

10. Unité optique d'émission/de réception (200) selon la revendication 8, dans laquelle la surface d'émission (228b) et l'autre surface d'émission (224b) sont conçues sous forme d'une optique sphérique, asphérique ou de forme libre pour provoquer, en plus d'un déplacement latéral du signal d'émission optique (208) vers l'axe de rotation (206), également une mise en forme du faisceau du signal d'émission optique (208) pour obtenir un faisceau d'émission (226) souhaité.

11. Unité optique d'émission/de réception (200) selon l'une des revendications 1 à 7, dans laquelle l'autre segment (220a) présente la surface d'émission (228b) qui est disposée au-dessus de l'émetteur optique et qui dirige le signal d'émission optique (208) émis par l'émetteur optique (200). 202) en direction de l'axe de rotation (206).

12. Unité optique d'émission/de réception (200) selon la revendication 11, dans laquelle la surface d'émission (228b) est réalisée sous forme d'une optique sphérique, asphérique ou de forme libre pour provoquer une mise en forme du faisceau du signal optique d'émission (208) pour obtenir un faisceau d'émission (226) souhaité.

13. Unité optique d'émission/de réception (200) selon l'une des revendications précédentes, avec au moins un autre émetteur optique (202', 202") qui est disposé à proximité du récepteur optique (204) sur le support (210), dans laquelle l'optique d'émission/de réception (214) présente au moins une autre optique d'émission qui est disposée ou intégrée dans l'optique de réception (218).

14. Unité optique d'émission/de réception (200) selon l'une des revendications précédentes, dans laquelle
l'optique de réception présente une première surface de réception sur la surface (218a) de l'optique réceptrice (218) orientée vers le récepteur optique (204) et une deuxième surface de réception sur la surface optique (218b) de l'optique de réception (218) opposée au récepteur (204),
dans laquelle la première surface de réception et la deuxième surface de réception sont conçues sous forme d'optiques sphériques, asphériques ou de forme libre.

15. Dispositif (300) de transmission de signaux, avec
au moins une première unité optique d'émission/de réception (200a) selon l'une des revendications précédentes; et
au moins une deuxième unité optique d'émission/de réception (200b) selon l'une des revendications précédentes;
dans lequel la première et la deuxième unité optique d'émission/de réception (200a, 200b) sont disposées l'une par rapport à l'autre de sorte qu'un faisceau d'émission (226) d'une unité d'émission/ réception (200a) éclaire l'optique de réception d'une unité d'émission/réception opposée (200b).
